# EUROPEAN PATENT APPLICATION

(11) **EP 4 844 475 A1**
(43) Date of publication of application: **25.11.2026**
(21) Application number: 25177334.7
(22) Date of filing: 19.05.2025
(51) Int. Cl.: G02C 7/10, G02F 1/163

(54) **METHOD SUITABLE FOR DRIVING AN ELECTROCHROMIC EYEWEAR LENS, DRIVER DEVICE, SPECTACLE AND CALIBRATION METHOD**

(71) Applicant: Carl Zeiss Vision International GmbH, 73430 Aalen (DE)
(72) Inventor: DONGMO, Saustin, 73430 Aalen (DE); FEDURIN, Nikolai, 73430 Aalen (DE); PARTHIBAN, Kunal, 73430 Aalen (DE); KARIM, Waiz, 73430 Aalen (DE)
(74) Representative: Kraus & Lederer PartGmbB

(57) **Abstract**

A method suitable for driving an electrochromic eyewear lens is provided.

The method comprises measuring a temperature associated with electrochromic material (13, 15) and applying a voltage to an electrochromic material (13, 15) of the electrochromic eyewear lens based on a desired transmission state of the electrochromic material (13, 15) with a duration (t1) based on the temperature and based on temperature-dependent calibration data. A corresponding driver device (18, 19) is also provided.

## Description

The present application relates to methods suitable for driving electrochromic eyewear lenses and corresponding driver devices. Furthermore, the application relates to spectacles including such a driver device and electrochromic eyewear lenses, and calibration methods.

It is desirable to adapt the optical transmission of spectacle lenses, in particular ophthalmic lenses used for vision correction, to environmental lighting conditions, such that they become darker in bright light (for example full sunlight) and fully transparent in poor lighting conditions. One solution to this problem are photochromic lenses, which change their transmission based on their exposure to ultraviolet (UV) radiation, becoming darker (lower transmission) with higher exposure to UV radiation.

However, photochromic lenses have disadvantages. For example, a wearer of corresponding spectacles has no possibility to influence the transmission, but the transmission is fully controlled by ambient UV radiation. This may for example be disadvantageous when driving a car with bright sunlight outside, as the windows of the cars like the windshield block the UV radiation, such that despite the bright lighting conditions the lenses essentially stay at full transmission. Furthermore, the transmission is temperature-dependent, and photochromic lenses tend not to reach very low transmission levels at high temperatures, such that for example on a hot and bright summer day the transmission may stay comparatively high. Finally, the reaction time of many photochromic lenses is slow, such that the transmission changes only slowly when the ambient lighting conditions change.

To solve at least some of these problems, electrochromic lenses can be used. Generally, electrochromic materials change their transmission depending on an applied voltage. By incorporating such electrochromic material into a lens and by providing a controller for applying voltages, a user controlled transmission of such lenses may be obtained. The state change of electrochromic lenses also tends to be faster than for photochromic lenses.

Currently, sunglasses are commercially available using liquid crystal-based or gel-based organic electrochromic materials. Such materials and lenses are described for example in JP 2024-068961 A, WO 2023/081 667 A1, WO2022/165 8676A1, WO2022/165 867A1, US9 274 395 B2 or US 6 033 592 A.

Such materials have the disadvantage of a strong temperature dependence and also need to have a voltage or current applied permanently and are therefore highly energy consuming. Consequently, such materials are less suitable for ophthalmic lenses providing also vision correction, which tend to be used daily and essentially all the time in contrast for example to sunglasses and therefore would require power all the time. An alternative electrochromic technology is referred to as solid state electrochromic technology. This technology can provide a broad range of transmission and has a memory effect, i.e. a voltage or current need not be applied permanently. Such solid state electrochromic devices are typically multilayer stacks including at least one layer of electrochromic material, for example a polymer electrolyte, an ion conductor that allows ions such as lithium ions or Potassium ions to move through it into and out from the electrochromic material to cause the optical property change, and transparent conductor layers such as transparent conducting oxides like indium tin oxide, ITO as electrodes. Such devices are for example described in detail in US11 754 901 B2. In this document, two pulses transmitting different energies to the electrodes provided adjacent to the electrochromic material are used, where the energy can be modified by changing the pulse duration.

Conventionally, for controlling the transmission of such electrochromic devices, a pulse-based control is used, where electrical pulses having a certain voltage are applied to electrodes of the above-mentioned multilayer stacks for charging and discharging of the same. Pulse-based control schemes are for example described in US 11 227 522 B2 and US 8 902 486 B1.

When lenses are manufactured including such electrochromic materials, the performance and characteristics of the electrochromic multilayer stack incorporated into the lens typically change from lens to lens, for example due to process variations. For example, there may be variations in a range of a voltage change at the lens, the memory effect of lenses can differ, and the voltage required to reach a certain transmission may vary. Nevertheless, in particular in spectacles using two lenses, it is important that the transmission of both lenses reaches the same value.

Controlling such solid state electrochromic lenses faces further constraints. For examples, in typical materials used the range of voltage which can be safely applied to the lens without degradation is in a relatively small range, for example between -1 V and +2 V. Therefore, the voltage cannot be used to control the speed of transmission change or the transmission beyond these limits without degradation. Furthermore, after applying a charging or discharging pulse to charge or discharge the material stack, the lens voltage typically takes time to settle. Typical values for such a settling times are between 300 ms to 500 ms.

US 2019 / 0 221 148 A1 uses a calibration to account for some variations between individual electrochromic devices. Moreover, this document discusses two approaches to deal with temperature variations. In a first approach described in the background portion of the document the applied voltage is varied with temperature. However, due to the above mentioned voltage constraints, this method is limited. The document then continues to propose a control scheme based on feedback, where voltage pulses are applied followed by a settling time until a desired transmission is reached. However, applying a plurality of such voltage pulses may lead to a flickering effect, which is not desirable for lenses used in spectacles, in particular ophthalmic lenses.

Therefore, it is an object to provide a method suitable for driving an electrochromic eyewear lens and a corresponding driver device enabling a switching behavior with at least less flickering compared to the prior art and without the need to vary voltages.

According to a first aspect, this is achieved by a method suitable for driving an electrochromic eyewear lens which comprises an electrochromic material, comprising applying a charging/discharging voltage to an electrochromic material of the electrochromic eyewear lens based on a desired transmission state of the electrochromic material. The method is characterized in that applying the charging/discharging voltage comprises applying the voltage with a duration based on an actual voltage at the electrochromic material, a target voltage at the electrochromic material and calibration data for the eyewear lens (100A, 100B) describing a relationship between the duration of applying the charging/discharging voltage and the voltage at the electrochromic material.

By varying the duration based on the calibration data, applying repeated pulses may be avoided, or at least the number of pulses to be applied may be reduced, therefore reducing flickering. The duration is determined in a deterministic way based on the calibration data. Nevertheless, the method may also use a feedback and repeated application of a voltage, i.e. if after application of the voltage with the duration a desired voltage at the electrochromic material has not been established, a further voltage pulse may be applied. However, also in those cases, by using the duration based on the temperature and the calibration data a number of pulses may be reduced.

An electrochromic material, as used herein is a material which changes its transmission based on a voltage applied thereto. The electrochromic material may in particular be a solid state electrochromic material as discussed in the introductory portion.

Eyewear lenses as used herein are lenses which are intended for use in a device to be worn on a head of a person such that the person looks through the lens. An example for an eyewear lens is an ophthalmic lens with refractive properties used for vision corrected. Such ophthalmic lenses are usually carried by spectacle frames, including rimless spectacle frames. In other embodiments, the lens may be a lens for sunglasses with adjustable transmission. In yet other embodiments, the lens may be a lens for virtual reality (VR) or augmented reality (AR) glasses, i.e. glasses that allow a person to view displayed data (including text, images, symbols etc.) , either alone (VR) or superimposed with the surroundings of the person (AR). Apart from using driving techniques as discussed in this application, such VR or AR glasses may be implemented in a conventional manner. Electrochromic eyewear lenses will also be shortly be referred to as electrochromic lenses or simply lenses in the following.

The term charging/discharging voltage is used to refer to a voltage applied for charging or discharging. It may be a voltage supplied e.g. by a battery. It should be noted that the term "applying a discharging voltage" also covers short-circuiting the electrodes. In other words, for discharging, instead of applying a specific discharging voltage from an external source, also a short-circuit between the electrodes is applied. When the potential at one of the electrodes is taken as a reference (i.e. 0V), this means applying 0V to the other electrode, and therefore also can be seen as applying a constant discharging voltage.

It may also be shortly referred to as applied voltage in the following.

The actual voltage, the target voltage and the voltage at the electrochromic material are preferably open lead voltages, i.e. voltages at the electrochromic material a predetermined time after the charging/discharging voltage has been applied. In this way, a voltage drop occurring after applying the charging/discharging voltage is taken into account.

Preferably, the method further comprises measuring a temperature associated with the electrochromic material. In this case, the calibration data comprises temperature-dependent calibration data, applying the voltage comprises applying the voltage with the duration based on the temperature and based on the temperature-dependent calibration data.

In this way, temperature variations may be taken into account, and also over a larger temperature range the need for a plurality of pulses may be avoided or mitigated.

A temperature associated with the electrochromic material is to be understood as a temperature which has a relationship to the temperature of the electrochromic material. In some embodiments, a temperature sensor may be placed directly adjacent to the electrochromic material, such that the measured temperature essentially corresponds to the temperature of the electrochromic material. In other embodiments, the temperature sensor may also be placed at some distance to the electrochromic material, for example at a controller or driver device which is also used for applying the voltage, for example on a printed circuit board (PCB) thereof. In this case, it is assumed that the temperature measured at least essentially corresponds to the temperature of the electrochromic material, or has a fixed relationship thereto. Conventional temperature sensors may be used, for example resistive temperature sensors, i.e. temperature sensors making use of the fact that many materials change their electrical resistance with temperature.

Preferably, the temperature-dependent calibration data describes a dependency of a switching speed of the electrochromic material on temperature. When the calibration data indicates a lower switching speed for a particular temperature, correspondingly the duration may be made longer, and if it indicates a faster switching speed, the duration may be made shorter. Therefore, essentially a "pulse length" of applying the voltage is tailored to the temperature, which avoids or mitigates the need for multiple pulses.

The charging/discharging voltage applied for the duration may be independent of temperature. In this way, applying high voltages outside a range where no degradation occurs may be avoided. The voltage may be constant for the duration. It should be noted that in some embodiments after applying such a constant charging/discharging voltage a further voltage and/or current may be applied. This further voltage and/or current may serve to maintain the voltage between a lower threshold and an upper threshold around a target voltage for the desired transmission state, in particular a target open lead voltage.

In particular, the temperature-dependent calibration data may describe a voltage at the electrochromic lens over time when applying a constant charging voltage or constant discharging voltage. The temperature-dependent calibration data may describe the open lead voltage, i.e. a voltage reached after a predefined time after charging, vs. time needed for charging or discharging to reach this open-lead voltage In this case, the duration may be determined by determining a first time associated with an actual (i.e. currently or momentarily present) voltage at the electrochromic material, and a second time associated with a target voltage for the electrochromic lens, and by then determining the duration as a difference between the first and second times.

Generally the temperature-dependent calibration data may be provided in different ways. For example, it may be stored as curves (with a certain step size), in form of lookup tables or as parameters of a function describing a respective calibration curve.

The target voltage to be reached may be determined based on further calibration data indicating a relationship between the target voltage and the desired transmission state. As mentioned above, the target voltage may be an open lead voltage, i.e. after interruption of a connection between voltage source and electrochromic material, and after a certain settlement time. The above-mentioned lower and upper thresholds around the target voltage then may also be determined based on this further calibration data as values around the target voltage where the transmission state varies less than a predefined value, e.g. less than 5%, less than 3%, preferably less than 2% or less than 1%.

By using temperature calibration as explained above and using the upper and lower thresholds obtained in this way for driving electrochromic lenses, differences in lens behavior may be taken into account. For example, transmission differences between the lenses may be mitigated and synchronization between the lenses obtained.

Furthermore, according to a second aspect a corresponding driver device with a memory storing calibration describing a relationship between a duration of applying a charging/discharging voltage and the voltage at the electrochromic material, a power generating circuit and a controller is provided. The controller is configured to perform the above methods, i.e. the controller is configured to control the power generating circuit to apply the charging/discharging voltage to an electrochromic material of an electrochromic eyewear lens based on a desired transmission state of the electrochromic material. The controller is further configured to control the power generating circuit such that applying the voltage comprises applying the voltage with the duration based on the temperature and based on an actual voltage at the electrochromic material, a target voltage at the electrochromic material and on the calibration data.

A power generating circuit generally is an entity that provides electrical power (i.e. voltage and current) to the electrodes and may for example include a battery (rechargable or non-rechargeable) or other source of electrical power like a solar cell.

Spectacles with at least one electrochromic eyewear lens, in particular two electrochromic eyewear lenses, and the driver device is also provided. In case of two electrochromic lenses, the temperature-dependent calibration data may be separate for each lens.

Furthermore, according to a third aspect a method suitable for obtaining such calibration data is provided. For this, for a reference lens of the type of lens for which the calibration applies calibration data may be measured for a plurality of temperatures, for example a first relationships between an open lead voltage at the electrochromic material depending on temperature for a predefined charging or discharging voltage and a time of applying the predefined charging or discharging voltage may be recorded. Additionally for individual lenses, corresponding data for a single temperature, for example room temperature, may be obtained as a second relationship. Temperature-dependent calibration data for this lens may then be obtained based on the first relationships and the second relationship, e.g. by shifting the measured calibration data for the reference lens as represented by the first relationships based on the measurement of the individual lens, i.e. the second relationship. This assumes that variations between lenses essentially cause only a shift of the curves represented by the first relationships, but the general form of the curves recorded remains unchanged.

A computer program for a controller of a driver device suitable for driving an electrochromic eyewear lens is also provided, which, when executed by the controller, causes the controller to control a power generating circuit to perform any method the first aspect explained above. The computer program may be provided on a tangible storage medium like a flash memory, a compact disc (CD), a digital versatile disc (DVD), or a read only memory (ROM). The computer program may also be provided as a data carrier signal.

For further illustrations, embodiments will be described referring to the attached drawings, wherein:
Fig. 1 is a diagram of a system including a driver device according to an embodiment,
Fig. 2 is a flowchart illustrating a method according to an embodiment,
Figs. 3A and 3B show curves as examples for calibration data, and Fig. 3C illustrates calibration data in form of a lookup table,
Fig. 4 is a flowchart illustrating a method according to a further embodiment,
Figs. 5A to 5C are diagrams for further illustrating the method of Fig. 4,
Fig. 6 is a diagram illustrating behavior of the voltage at an electrochromic material when the method is executed,
Fig. 7 is a flowchart illustrating a method according to a further embodiment,
Fig. 8 is a diagram illustrating further calibration data,
Fig. 9 is a flowchart illustrating a calibration method according to an embodiment, and
Fig. 10 illustrates spectacles according to an embodiment.

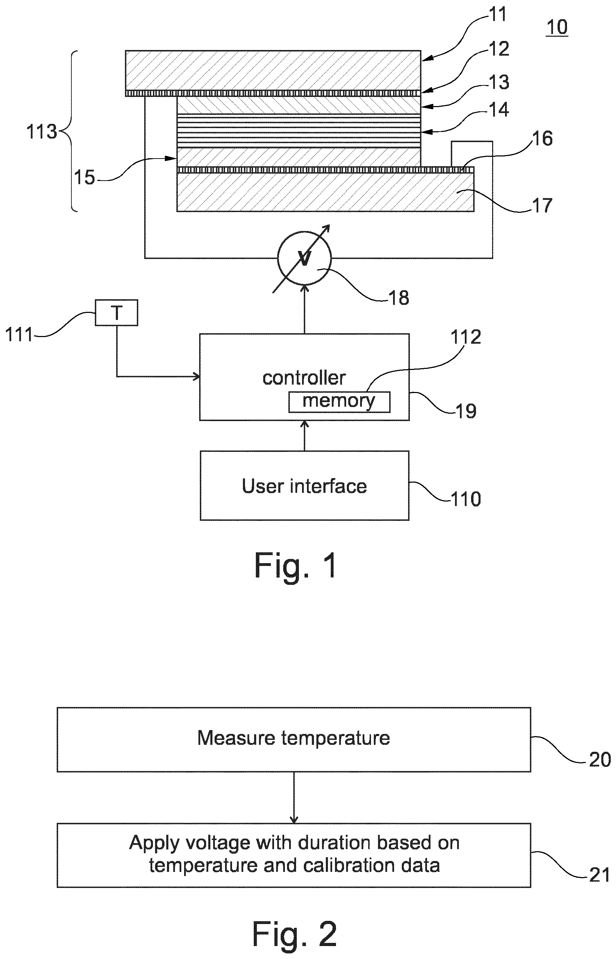

Fig. 1 is a diagram illustrating a system 10 according to an embodiment, including a driver device according to an embodiment.

System 10 of Fig. 1 comprises an example of a material stack 113 including a substrate 11, a first electrode 12 made of indium tin oxide (ITO) or another transparent conducting material, a first layer 13 of electrochromic material, a solid-state electrolyte layer 14 which serves as a drift layer for ions, a second electrochromic layer 15, a second electrode 16 which again may be made of ITO, and a transparent cap layer 17. Substrate 11 in the embodiments described herein relating to eyewear lenses may for example be a lens material, or substrate 11 and cap layer 17 may be material of the lens between which the other layers 12 to 16 are sandwiched, i.e. may be made of the same material. The lens may be an ophthalmic lens for spectacles.

Electrically speaking, layers 12 to 16 essentially form a device including a capacitor with electrodes 12, 16 and additional resistive (R) and inductive (L) components between the electrodes 12, 16, which may be charged or discharged. A transmission of electrochromic material layers 13, 15 depends on the voltage across the electrodes, i.e. the voltage between electrodes 12, 16.

For charging or discharging the electrodes, a driver device including a power generating circuit 18, and a controller 19 is provided. Power generating circuit 18 is adjustable to apply either a charging voltage or a discharging voltage between electrodes 12, 16. As mentioned above, applying a discharging voltage may also comprise short-circuiting electrodes 12, 16. The charging voltage serves to charge the capacitor, thus increasing the voltage applied to electrochromic layers 13, 15, and the discharging voltage serves to discharge the capacitor by a discharge current, thus lowering the voltage applied to electrochromic layers 13, 15. This in turn changes the transmission. Power generating circuit 18 further includes a voltmeter to measure the voltage between electrodes 12, 16, in particular an open lead voltage where the voltage generation is disconnected.

In the embodiment of Fig. 1, controller 19 controls power generating circuit 18 to apply a voltage pulse for charging or discharging with a fixed voltage and a variable duration. The duration depends on a temperature measured by a temperature sensor 111. Temperature sensor 111 may be provided on a common printed circuit board (PCB) with controller 19. Furthermore, controller 19 includes a memory 112, in particular a non-volatile memory, where calibration data, preferably temperature-dependent calibration data is stored. Controller 19 determines the duration of a discharging or a charging voltage based on the calibration data in memory 112, preferably based on the measured temperature and the temperature-dependent calibration data. Examples for this process will be discussed further below.

Furthermore, system 10 comprises a user interface 110 allowing a user to control the system, for example to increase or decrease the transmission. User interface 110 may for example include two touch sensors, one for reducing the transmission and one for increasing the transmission. In other embodiments, instead or in addition to a user interface, a sensor sensing ambient light conditions like a phototransistor or a photodiode may be provided, and the transmission may be of electrochromic material layers, 13, 15 may be controlled based on the ambient light conditions.

Fig. 2 illustrates a corresponding method of a high level operation of controller 19 and a power generating circuit 18. At step 20, a measured temperature is received by controller 19, for example measured by temperature sensor 111. At step 21, the method comprises applying a voltage to an electrochromic material with a duration based on the temperature and calibration data, as explained above. By using the calibration data and the duration based on temperature, a number of pulses needed for reaching a desired transmission state of the electrochromic material may be reduced (for example reduced to one pulse), and therefore flickering may be reduced or even avoided.

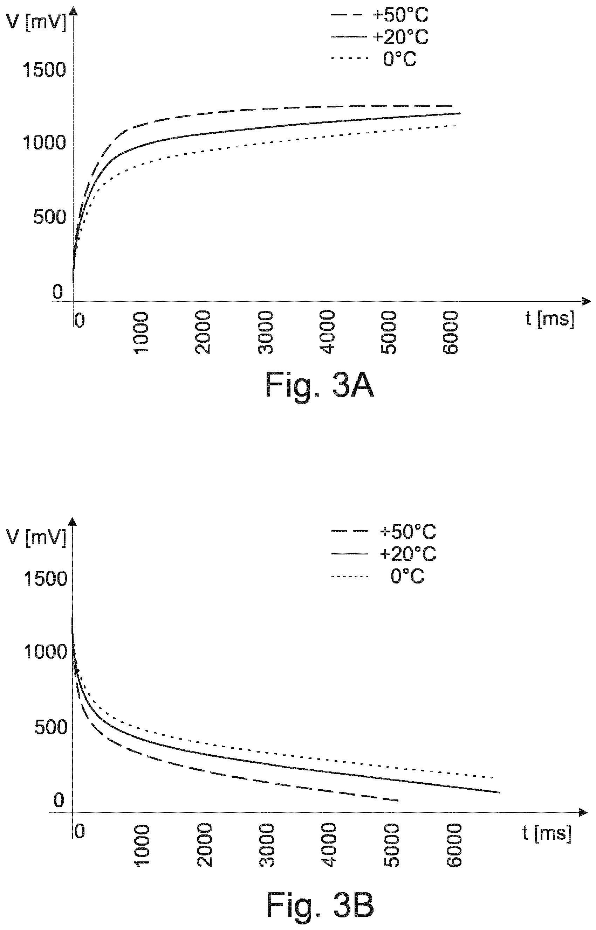

Figs. 3A to 3C illustrate examples for temperature-dependent calibration data.

Fig. 3A shows a voltage across an electrochromic material, for example between electrodes 12 and 16 of Fig. 1, when charging from 0 volt applied voltage with a predefined charging voltage, for example a charging voltage between 1V and 2V, for example 1.6V or 1.2V.

Fig. 3A shows three curves for three different temperatures, namely 0°C, +20°C and +50°C. This is only an example, temperature curves may be provided in smaller temperature intervals, for example intervals of 5°C. When measuring the temperature, the curve closest to the measured temperature or values interpolated between curves may be used. As can be seen, generally in this scenario, the voltage rises quickly at first, but then takes a longer time to reach higher voltage levels. For higher temperatures, the same voltage is reached faster than for lower temperatures.

Fig. 3B shows a corresponding discharge curve, where for example a discharge voltage of 0 volt is applied to discharge from a starting voltage of 1000 mV, i.e. 1 V. Here, for higher temperatures discharging is faster.

The curves of Figs 3A and 3B each show the open lead voltage between the electrodes vs. time needed for charging or discharging when applying a specific constant charging voltage or discharging voltage (like a short circuit). For recording such curves, a stepwise charging or discharging may be performed, e.g. charging for a timestep, waiting for settling to the open lead voltage (e.g. between 300ms and 500ms), and repeating this.

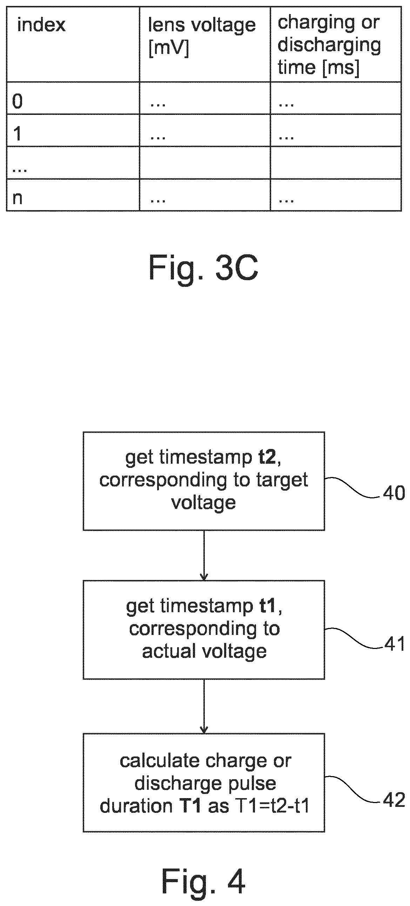

Such curves may be stored in an appropriate manner in memory 112 of Fig.1. For example, the curves may be directly stored in memory 112 with a certain time step size (for example step size of 10 milliseconds (ms), or, in other words, the values of the curves are stored for 0 ms,10 ms, 20 ms etc.). In other embodiments, a parametrized functions may be used to approximate the curves, and the parameters may be stored. For example, the curves of Fig. 3A may be approximated at least for t above some threshold with a function similar to V=a*In(t)+b, where t is the time in milliseconds, V is the voltage is millivolts, In is the natural logarithm and a and b are parameters. These parameters may then be stored in memory 112. In other embodiments, lookup tables may be used. An example lookup table is shown in Fig. 3C. Here, for various indices the voltages and times are stored, similar to storing the curves.

Fig. 4 is a more detailed embodiment illustrating determination of a duration of a voltage pulse based on such calibration data.

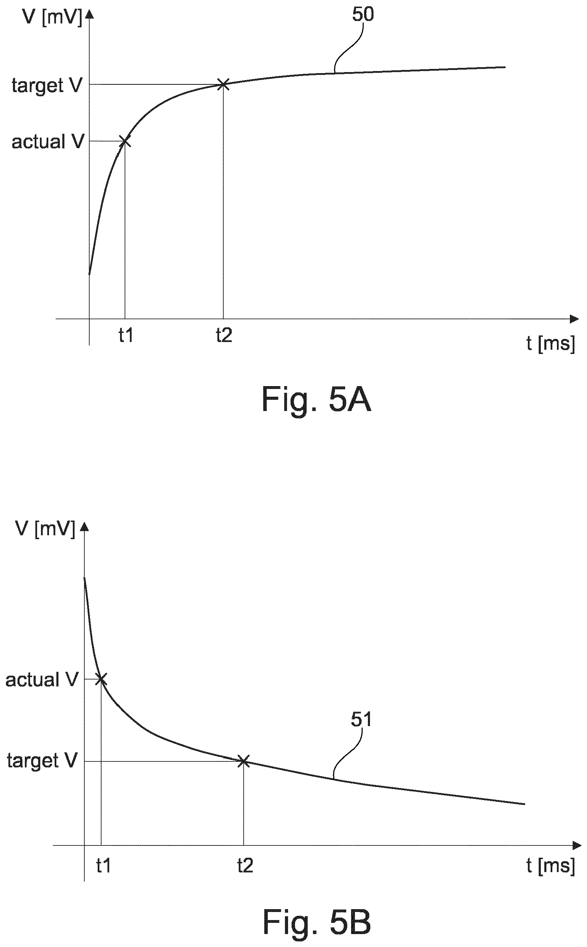

Generally, the situation is that the voltage at the electrochromic material should be brought from an actual voltage to a target voltage corresponding to a desired transmission state. To determine a duration, in step 40 a timestamp t2 corresponding to the target voltage is determined, at step 41 a timestamp t1 corresponding to the actual voltage is determined, and at step 42 the duration of a charging or discharging pulse T1 is calculated as T1=t2-t1. Fig. 5A illustrates this for a charging pulse. A curve 50 is the curve of the calibration data of Fig. 3A corresponding to the measured temperature (possibly by interpolation between two stored curves of adjacent temperatures). Timestamps t2, t1 for the target voltage "target V" and the actual voltage "actual V" can be taken from the curve. A time duration T1 for a pulse is then calculated as t2-t1.

Fig. 5B shows the same scenario for a discharge, where a curve 51 is one of the curves of Fig. 3B or an interpolated curve for the correct temperature.

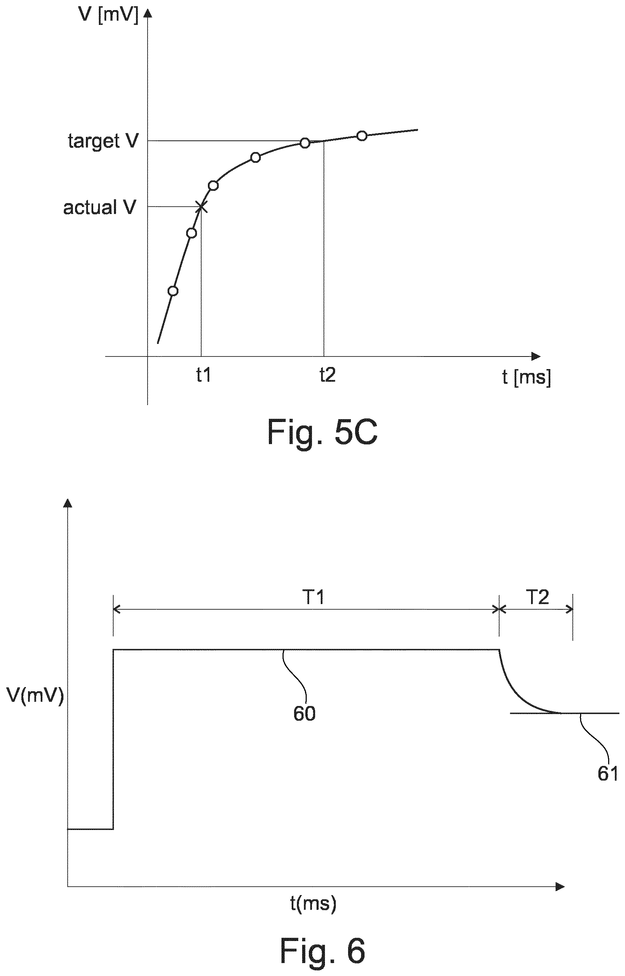

Fig. 5C shows a case where values of a curve are stored in discrete timesteps. The solid circles represent the timesteps of the curve. Between these timesteps for which values are stored, a linear interpolation may be performed as shown.

Then, as shown in Fig. 6 a voltage pulse 60 of length T1 is applied. After the voltage pulse is ended, and the electrochromic material is disconnected from voltage generation circuit 18, the voltage drops to an open lead voltage 61 due to discharging and balancing effects after a time T2, which open lead voltage 61 determines the transmission.

In other embodiments, only a single curve for a single temperature, e.g. room temperature, may be used as calibration data. In such an embodiment still the time duration of applying the charging/discharging voltage may be determined as above, but without temperature dependence. This may still give good performance for a certain temperature range (e.g. +/- 10° around the temperature for which the curve was recorded) and requires less calibration and stored data.

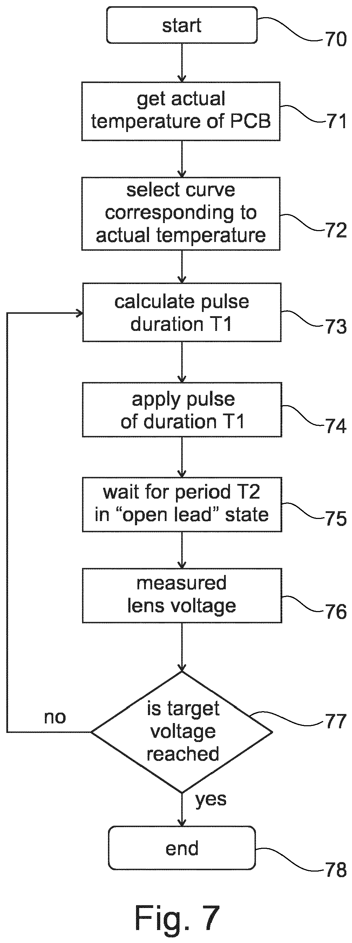

In many cases, the desired target voltage in this way may be reached with a single voltage pulse. However, also an iterative process may be used, which due to the duration adjustment takes less iterations than conventional approaches. Fig. 7 shows a flowchart illustrating a corresponding embodiment.

The method of Fig. 7 starts at 70. At step 71, the actual temperature is measured, for example temperature on a printed circuit board where the controller and temperature sensor 111 of Fig. 1 is provided. At a step 72, the method of Fig. 7 comprises selecting a calibration curve corresponding to this actual temperature, for example curves as illustrated with reference to Figs. 3A and 3B, or a corresponding stored function or stored lookup tables. At 73, based on an actual voltage and a target voltage, a pulse duration t1 is calculated as described above with reference to Figs. 5A to 5C, and at step 74 a voltage pulse of the calculated duration T1 is applied, as illustrated in Fig. 6. At step 75, in an open lead state, i.e. essentially with disconnected electrodes, a wait for a period T2 is performed to settle to the open lead voltage, see Fig. 6, period T2. At step 76, the method comprises measuring the open lead voltage. At step 77, the method comprises checking if the target voltage is reached. If yes, the method ends at 78. If no, the method jumps back to step 73 and the calculation of the pulse duration t1, where now the lens voltage measured at step 76 is used as the actual voltage.

While in this case iterations are performed, as the pulse duration t1 is calculated based on the temperature calibration less iterations are needed than in conventional approaches.

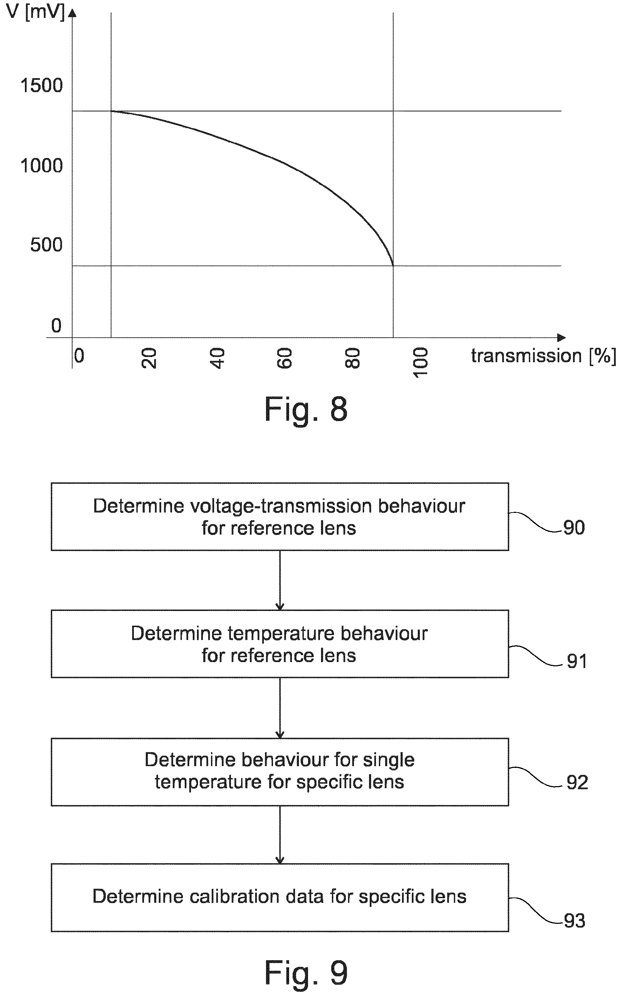

For determining the target voltage, a further calibration may be performed. In this calibration, for a specific lens type or specific type of electrochromic stack (as shown for example in Fig. 1), the open lead voltage is measured with the mentioned voltmeter and corresponding transmissions are measured optically for a plurality of voltages. Fig. 8 shows a corresponding calibration curve. This calibration needs to be performed only once for a reference lens and then can be used to determine the open lead voltage for a desired transmission.. Also the curve of Fig. 8 may be stored in a lookup table are maybe approximated by a parametrized function, where then the parameters are stored. This calibration may also be used to generate upper and lower thresholds for maintenance as mentioned above, to keep the transmission at a desired level. In this way, by selecting appropriate thresholds transmission variations during use may be reduced.

By using temperature calibration as explained above and using the upper and lower thresholds obtained in this way for driving electrochromic lenses, differences in lens behavior may be taken into account. For example, transmission differences between the lenses may be mitigated.

Fig. 9 is a flowchart illustrating a calibration method for an embodiment. At step 90, the voltage transmission behavior as shown in Fig. 8 is determined for a reference lens.

At 91, the method comprises determining the temperature behavior for the reference lens, i.e. curves like shown in Figs. 3A and 3B are measured for a plurality of temperatures for the reference lens. These curves are first relationships between open lead voltage and duration of applying the charging/discharging voltage. A reference lens is a lens of the same type as the lens actually to be calibrated. Steps 90 and 91 have to be performed only once for a specific lens type.

At step 92, the method then comprises determining the behavior for a single temperature for a specific lens. For example, curves like Figs. 3A and 3B are recorded only for one temperature, for example room temperature or +20°C. This curve corresponds to a second relationship between open lead voltage and duration of applying the charging/discharging voltage. At step 93, the method then comprises determined calibration data for the specific lens based on the first relationships and second relationship. For this, the behavior determined at 92 is compared to the behavior of the reference lens determined at 91 for the same temperature to determine shift. Then, to determine the calibration data for the specific lens, all the curves recorded at 91 are shifted by the thus determined shift amount.

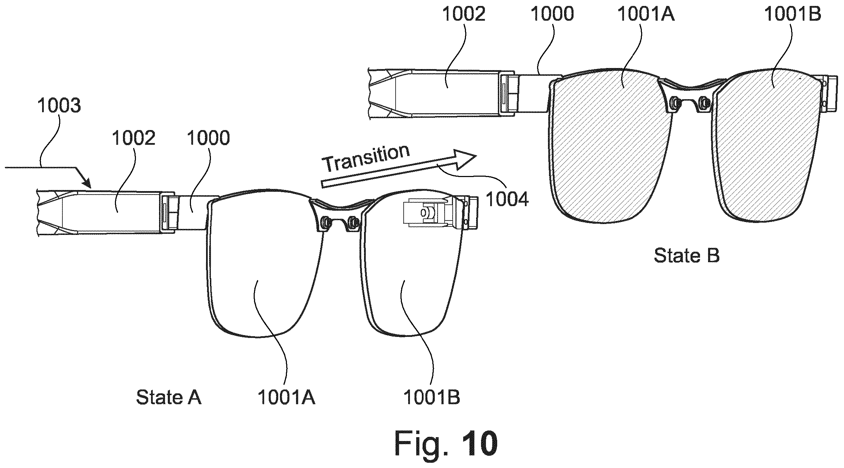

Fig. 10 shows spectacles according to an embodiment in a state A (high transmission) and a state B (low transmission).

The spectacles shown include a spectacle frame 1000 with lenses 1001A, 1001B. Lenses 1001A, 1001B, in the example shown are ophthalmic lenses which include an electrochromic stack as shown in Fig. 1. A driver circuit as discussed with respect to Fig. 1 is incorporated as a driver device 1002 in temple arms of the spectacle frame 1000. By a user input 1003, for example using touch sensors, a transition between state A and state B as indicated by an arrow 1004 (or vice versa) may be performed, and also intermediate states are possible. Driver circuit 1002 stores calibration data separately for lenses 1001A, 1001B to ensure that both lenses are switched to the same state, as explained above, so that highly similar transmission levels may be obtained.

## Claims

1. A method suitable for driving an electrochromic eyewear lens (1001A, 1001B) comprising an electrochromic material (13, 15), comprising:
applying a charging/discharging voltage to an electrochromic material (13, 15) of the electrochromic eyewear lens (1001A, 1001B) based on a desired transmission state of the electrochromic material (13, 15),
**characterized in that**
applying the charging/discharging voltage comprises applying the charging/discharging voltage with a duration (T1) based on an actual voltage at the electrochromic material (13, 15), a target voltage at the electrochromic material (13, 15) and calibration data for the eyewear lens (100A, 100B) describing a relationship between the duration of applying the charging/discharging voltage and the voltage at the electrochromic material.

2. The method of claim 1, wherein the actual voltage, the target voltage and the voltage at the electrochromic material are open lead voltages.

3. The method of claim 1 or 2, **characterized in that** the method further comprises:
measuring a temperature associated with the electrochromic material (13, 15), **in that** the calibration data comprises temperature-dependent calibration data,
and **in that**
applying the voltage comprises applying the voltage with the duration (T1) based on the temperature and based on the temperature-dependent calibration data.

4. The method of claim 3, **characterized in that** the temperature-dependent calibration data describes a dependency of a switching speed of the electrochromic material (13, 15) on temperature.

5. The method of any one of claims 1 to 4, **characterized in that** the charging/discharging voltage is constant for the duration (T1) and independent of temperature.

6. The method according to any one of claims 1 to 5, **characterized in that** determining the duration comprises determining a first time associated with the actual voltage based on the calibration data, determining a second time associated with the target voltage based on the calibration data and determine the duration (T1) as a difference between the first time (t1) and the second time (t2).

7. The method of any one of claims 1 to 6, **characterized in that** the method further comprises determining the target voltage based on the desired transmission state and further calibration data linking the transmission state and the target voltage.

8. The method of claim 7, **characterized by** further comprising determining an upper threshold and a lower threshold based on the target voltage and the further calibration data, wherein applying the voltage further comprises regulating the voltage between the upper threshold and the lower threshold.

9. A driver device suitable for driving an electrochromic eyewear lens (1001A, 1001B), comprising:
a power generating circuit (18) configured to apply a charging/discharging voltage to an electrochromic material (13, 15) of the electrochromic eyewear lens (1001A, 1001B), and a controller (19) configured to control the power generating circuit (18) to apply the voltage based on a desired transmission state of the electrochromic material, **characterized in that** the controller (19) comprises a memory (112) storing calibration data describing a relationship between the duration of applying the charging/discharging voltage and the voltage at the electrochromic material and is configured to control the power generating circuit (18) to apply the voltage with a duration (T1) based on an actual voltage at the electrochromic material, a target voltage at the electrochromic material and on the calibration data.

10. The driver device of claim 9, **characterized in that** the controller (19) is configured to control the power generating circuit (18) to perform the method of any one of claims 1 to 8.

11. Spectacles, **characterized by** comprising:
a spectacle frame (1000),
a first electrochromic eyewear lens (1001A),
a second electrochromic eyewear lens (1001B), and
the driver device of claim 9 or 10 for driving the first and second electrochromic eyewear lenses (1001A, 1001B).

12. The spectacles of claim 11, **characterized in that** the calibration data stored in the memory (112) are different for the first electrochromic eyewear lens (1001A) and the second electrochromic eyewear lens (1001B).

13. A method of obtaining temperature-dependent calibration data for driving an electrochromic lens comprising electrochromic material, **characterized by** comprising:
measuring first relationships between an open lead voltage at the electrochromic lens and time of applying a charging/discharging voltage for a plurality of temperatures for a reference lens,
measuring a second relationship between the open lead voltage at the electrochromic lens and time of applying the charging/discharging voltage for a single temperature for an electrochromic lens to be calibrated, and
determining temperature-dependent calibration data for the electrochromic lens to be calibrated based on the first relationships and the second relationship.

14. A computer program for a controller (19) of a driver device suitable for driving an electrochromic eyewear lens (1001A, 1001B) , which, when executed by the controller (19), causes the controller to control a power generating circuit (18) to perform the method of any one of claims 1 to 8.

15. A tangible storage medium storing the computer program of claim 14.
